# EUROPEAN PATENT APPLICATION

(11) **EP 4 492 831 A1**
(43) Date of publication of application: **15.01.2025**
(21) Application number: 23784248.9
(22) Date of filing: 03.04.2023
(51) Int. Cl.: H04W 4/06

(54) **METHOD FOR TRANSMITTING MULTICAST AND BROADCAST SERVICE INTEREST INDICATION MESSAGE, AND RELATED APPARATUS**

(30) Priority: 08.04.2022 CN 202210366678
(71) Applicant: Huawei Technologies Co., Ltd., Shenzhen, Guangdong 518129 (CN)
(72) Inventor: ZHANG, Haisen, Shenzhen, Guangdong 518129 (CN); LI, Bingzhao, Shenzhen, Guangdong 518129 (CN); XU, Bin, Shenzhen, Guangdong 518129 (CN)
(74) Representative: Körber, Martin Hans
(86) International application number: PCT/CN2023/085964
(87) International publication number: WO 2023/193685

(57) **Abstract**

This application provides a method for transmitting a multicast and broadcast service interest indication message and a related apparatus. In the method, a terminal device receives a SIB of a SCell, where the SIB includes information used for obtaining an MCCH configuration of an MBS; and sends an MII message, where the MII message carries an identifier of an MBS service of interest to the terminal device. In this way, in some embodiments, for example, in a scenario in which the secondary cell can provide a broadcast service, the terminal device may report, based on the received SIB of the SCell, the identifier of the MBS service of interest to the terminal device, thereby avoiding a problem that a network side cannot learn of an MBS broadcast service that the terminal device is interested in receiving.

## Description

This application claims priority to Chinese Patent Application No. 202210366678.6, filed with the China National Intellectual Property Administration on April 8, 2022 and entitled "METHOD FOR TRANSMITTING MULTICAST AND BROADCAST SERVICE INTEREST INDICATION MESSAGE AND RELATED APPARATUS", which is incorporated herein by reference in its entirety.

### TECHNICAL FIELD

This application relates to the field of communication technologies, and in particular, to a method for transmitting a multicast and broadcast service interest indication message and a related apparatus.

### BACKGROUND

A multicast and broadcast service (Multicast and Broadcast Service, MBS) is a service oriented to a plurality of terminal devices, and may provide a live service, a public security service, a batch software update service, and the like. In the MBS, a multicast service is usually a service with a high quality of service (Quality of Service, QoS) requirement, and a broadcast service is usually a service with a low QoS requirement. When the broadcast service is provided, the terminal device may autonomously perform reception based on configuration information. For example, two steps are required for configuration of a broadcast service. One step is that a terminal needs to receive a system information block (System information block, SIB) that is of a primary cell (primary cell, PCell) and that includes information used for obtaining a multicast and broadcast service control channel (MBS Control Channel, MCCH) configuration of the MBS, and needs to receive a SIB that is of the PCell and that includes a mapping relationship between a frequency and the MBS or an MBS frequency selection area identifier. The other step is that the terminal needs to report an MBS interest indication (MBS Interest Indication, MII) message, to notify a network side of an MBS broadcast service that a terminal device in a radio resource control connected (radio resource control_connected, RRC_CONNECTED) state is receiving or is interested in receiving.

It can be learned that whether the terminal device reports the MII message depends on whether the foregoing two SIBs of the PCell are received. However, in a scenario in which a secondary cell can provide the broadcast service, how the terminal reports the MII message is an urgent problem to be resolved.

### SUMMARY

This application provides a method for transmitting a multicast and broadcast service interest indication message and a related apparatus, to obtain a multicast and broadcast service interest indication message in a timelier manner.

According to a first aspect, this application provides a method for transmitting a multicast and broadcast service interest indication message. The method may be performed by a communication apparatus. The communication apparatus may be a communication device or a communication apparatus, for example, a chip, that can support a communication device in implementing a function required in the method. For example, the communication apparatus is a terminal device, a chip that is disposed in the terminal device and that is configured to implement a function of the terminal device, or another component configured to implement a function of the terminal device. In the following description process, an example in which the terminal device is used as an execution entity is used for description.

The method includes: The terminal device receives a SIB of a SCell, where the SIB includes information used for obtaining an MCCH configuration of an MBS; and sends an MII message, where the MII message carries an identifier of an MBS service of interest to the terminal device. It can be learned that in a scenario in which the secondary cell can provide a broadcast service, the terminal device receives the SIB that is of the SCell and that includes information used for obtaining the MCCH configuration of the MBS. In this way, the identifier of the MBS service of interest to the terminal device may be reported, thereby avoiding a problem that a network side cannot learn of an MBS broadcast service that the terminal device is interested in receiving.

A name of the SIB including the information used for obtaining the MCCH configuration of the MBS is not limited in this application. For ease of description, the SIB including the information used for obtaining the MCCH configuration of the MBS is referred to as a SIB X for short.

Optionally, the SCell may be a SCell other than a PCell in a serving cell that provides a radio resource for the terminal device. Optionally, in a dual connectivity scenario, a SCell is a SCell in a master cell group and/or a secondary cell group that provides a radio resource for the terminal device.

Optionally, the SIB X of the SCell is received through dedicated signaling. Optionally, the MII message may further carry at least one of MBS frequency information and MBS priority information.

In an optional implementation, that the terminal device sends an MII message includes: If SIB Xs of all cells in a cell set are not received after the MII message is sent last time, the terminal device sends the MII message, where the cell set includes one or more cells that provide a radio resource for the terminal device. In other words, if the terminal device receives the SIB X of the SCell, and if the terminal device does not receive the SIB Xs of all the cells in the cell set after sending the MII message last time, the terminal device sends the MII message.

Optionally, the cell set includes one or more cells that provide a radio resource for the terminal device after the terminal device sends an MII message last time. Alternatively, the cell set includes the master cell group and/or the secondary cell group. Alternatively, the cell set includes a cell (namely, a serving cell) that provides a radio resource for the terminal device and a cell (namely, a non-serving cell) that does not provide a radio resource for the terminal device.

In another optional implementation, that the terminal device sends an MII message includes: If the identifier of the MBS service of interest to the terminal device is different from an identifier that is of an MBS service and that is carried in an MII message sent last time, the terminal device sends the MII message. In other words, if the terminal device receives the SIB X of the SCell, and if the identifier of the MBS service of interest to the terminal device is different from the identifier that is of the MBS service and that is carried in the MII message sent last time, the terminal device sends the MII message.

By using the foregoing method, the terminal device may autonomously determine, based on the received SIB X of the SCell, whether to report the MII message that carries the identifier of the MBS service, so as to report the MII message in a timely and flexible manner.

According to a second aspect, this application further provides a method for transmitting a multicast and broadcast service interest indication message. The method may be performed by a communication apparatus. The communication apparatus may be a communication device or a communication apparatus, for example, a chip, that can support a communication device in implementing a function required in the method. For example, the communication apparatus is a terminal device, a chip that is disposed in the terminal device and that is configured to implement a function of the terminal device, or another component configured to implement a function of the terminal device. In the following description process, an example in which the terminal device is used as an execution entity is used for description.

The method includes: The terminal device receives first indication information, where the first indication information indicates the terminal device to report an identifier of a multicast and broadcast service MBS service; and sends a multicast and broadcast service interest indication MII message, where the MII message carries an identifier of an MBS service of interest to the terminal device.

It can be learned that in the method, the terminal device may determine, based on the first indication information from a network device, whether to report the MII message that carries the identifier of the MBS service of interest to the terminal device. In this way, the network side can learn the identifier of the MBS service of interest to the terminal device in a timely manner, so as to schedule an MBS service for the terminal device in a timely manner. In addition, the first indication information is sent by the network device, so that the MII message can be obtained in a more flexible manner.

In an optional implementation, the first indication information is carried in a system message. An indication indicating whether all terminal devices in a cell need to report the MII message may be introduced into the system message. Alternatively, the system message implicitly indicates whether all terminal devices in the cell need to report the MII message.

In another optional implementation, the first indication information is received through dedicated signaling. In this way, the terminal device may determine, based on the dedicated signaling, whether to report the MII message that carries the identifier of the MBS service of interest to the terminal device. Therefore, the network side can obtain the MII message in a timely manner.

In still another optional implementation, the first indication information is carried in a message in a random access procedure. In this way, the terminal device can report, as early as possible in the random access procedure, the identifier of the MBS service of interest to the terminal device, thereby avoiding a delay caused when the terminal device reports the MII message to the network device after entering a connected mode and performing RRC connection reconfiguration, and avoiding a delay and signaling overhead caused by reconfiguration when a resource or scheduling information configured for an MBS service is inappropriate.

According to a third aspect, this application further provides a method for transmitting a multicast and broadcast service interest indication message. The method may be performed by a communication apparatus. The communication apparatus may be a communication device or a communication apparatus, for example, a chip, that can support a communication device in implementing a function required in the method. For example, the communication apparatus is a network device (for example, a base station), a chip that is disposed in the network device and that is configured to implement a function of the network device, or another component configured to implement a function of the network device. The communication method may correspond to the communication method in the second aspect, and is described from a perspective of the network device. An example in which the network device is used as an execution entity is used for description.

The method includes: The network device sends first indication information, where the first indication information indicates a terminal device to report an identifier of a multicast and broadcast service MBS service; and the network device receives a multicast and broadcast service interest indication MII message, where the MII message carries an identifier of an MBS service of interest to the terminal device.

It can be seen that in this method, the network device indicates whether the terminal device needs to report the MII message that carries the identifier of the MBS service of interest to the terminal device. In this way, the network side can learn the identifier of the MBS service of interest to the terminal device in a timely manner, so as to schedule an MBS service for the terminal device in a timely manner.

Optionally, the first indication information is carried in a system message. The network device may explicitly or implicitly indicate, by using the system message, whether all terminal devices in a cell need to report an MII message that carries an identifier of an MBS service.

Optionally, the first indication information is received through dedicated signaling. In this way, when the network side has MII messages of some terminal devices but does not have MII messages of other terminal devices, the network device may accurately indicate, based on the dedicated signaling, the other terminal devices to report the MII messages.

Optionally, the first indication information is carried in a message in a random access procedure. In this way, the network device can learn, in a random access procedure of the terminal device, the identifier of the MBS service of interest to the terminal device, thereby avoiding a problem that resources or scheduling information configured for an MBS service is inappropriate and needs to be reconfigured, in a case in which the network device learns the identifier of the MBS service of interest to the terminal device only after the terminal device enters a connected mode and completes reconfiguration.

Refer to related descriptions in the second aspect for further descriptions of this part. Details are not described herein again.

According to a fourth aspect, this application provides a communication apparatus. The communication apparatus may be a terminal device, an apparatus in a terminal device, or an apparatus that can be used in combination with a terminal device. The communication apparatus may alternatively be a chip system. The communication apparatus may perform the method in the first aspect or the second aspect. A function of the communication apparatus may be implemented by hardware, or may be implemented by hardware executing corresponding software. The hardware or the software includes one or more units or modules corresponding to the foregoing functions. The unit or the module may be the software and/or the hardware.

In an optional implementation, the communication apparatus may include a communication unit, and may perform the communication method according to the first aspect. The communication unit is configured to:
receive a system information block SIB of a secondary cell SCell, where the SIB includes information used for obtaining a multicast and broadcast service control channel MCCH configuration of a multicast and broadcast service MBS; and
send a multicast and broadcast service interest indication MII message, where the MII message carries an identifier of an MBS service of interest to the communication apparatus.

Optionally, the communication apparatus may further include a processing unit, configured to set content of the MII message or determine the MII message.

The communication apparatus may report the identifier of the MBS service of interest to the communication apparatus, thereby avoiding a problem that a network side cannot learn of an MBS broadcast service that the communication apparatus is interested in receiving.

In an optional implementation, the sending, by the communication unit, an MII message is specifically: if SIB Xs of all cells in a cell set are not received after the MII message is sent last time, sending the MII message, where the cell set includes one or more cells that provide a radio resource for the communication apparatus.

In another optional implementation, the sending, by the communication unit, an MII message is specifically: if the identifier of the MBS service of interest to the communication apparatus is different from an identifier that is of an MBS service and that is carried in an MII message sent last time, sending the MII message.

In still another optional implementation, the sending, by the communication unit, an MII message is specifically: if SIB Xs of all cells in a cell set are not received after the MII message is sent last time, and if the identifier of the MBS service of interest to the communication apparatus is different from an identifier that is of an MBS service and that is carried in an MII message sent last time, sending the MII message.

In an optional implementation, the SCell is a SCell in a master cell group MCG and/or a secondary cell group SCG that provides a radio resource for the communication apparatus.

In an optional implementation, the cell set includes one or more cells that provide a radio resource for the communication apparatus after the communication apparatus sends an MII message last time.

In an optional implementation, the SIB of the SCell is received through dedicated signaling.

In an optional implementation, the MII information further carries MBS frequency information and MBS priority information.

In another optional implementation, the communication apparatus includes a communication unit.

The communication unit is configured to receive first indication information, where the first indication information indicates the communication apparatus to report an identifier of a multicast and broadcast service MBS service.

The communication unit is further configured to send a multicast and broadcast service interest indication MII message, where the MII message carries an identifier of an MBS service of interest to the communication apparatus.

It can be seen that in this method, a network device indicates whether the terminal device needs to report the MII message that carries the identifier of the MBS service of interest to the terminal device. In this way, the network side can learn the identifier of the MBS service of interest to the terminal device in a timely manner, so as to schedule the MBS service for the terminal device in a timely manner.

Optionally, the first indication information is carried in a system message; the first indication information is received through dedicated signaling; or the first indication information is carried in a message in a random access procedure.

Refer to the method and beneficial effects in the first aspect or the second aspect for operations performed by the communication apparatus and beneficial effects thereof.

According to a fifth aspect, this application provides a communication apparatus. The communication apparatus may be a network device, an apparatus in a network device, or an apparatus that can be used in combination with a network device. The communication apparatus may perform the method in the third aspect. A function of the communication apparatus may be implemented by hardware, or may be implemented by hardware executing corresponding software. The hardware or the software includes one or more units or modules corresponding to the foregoing functions. The unit or the module may be the software and/or the hardware.

In an optional implementation, the apparatus includes a communication unit. The communication unit is configured to send first indication information. The first indication information indicates a terminal device to report an identifier of a multicast and broadcast service MBS service. The communication unit is further configured to receive a multicast and broadcast service interest indication MII message. The MII message carries an identifier of an MBS service of interest to the terminal device.

In an optional implementation, the first indication information is carried in a system message; the first indication information is received through dedicated signaling; or the first indication information is carried in a message in a random access procedure.

Refer to the method and beneficial effects in the third aspect for operations performed by the communication apparatus and beneficial effects thereof.

According to a sixth aspect, this application provides a computer-readable storage medium. The storage medium stores instructions, and when a computer program or the instructions are executed by a communication apparatus, the method shown in any one of the first aspect to the third aspect or the possible implementations of the first aspect to the third aspect is implemented.

According to a seventh aspect, this application provides a computer program product including instructions. When a communication apparatus reads and executes the instructions, the communication apparatus is enabled to perform the method shown in any one of the first aspect to the third aspect or the possible implementations of the first aspect to the third aspect.

According to an eighth aspect, this application provides a communication system, including at least one communication apparatus configured to perform the method in the second aspect, and at least one communication apparatus configured to perform the method in the third aspect. Alternatively, the communication system includes at least one communication apparatus configured to perform the fourth aspect, and at least one communication apparatus configured to perform the fifth aspect.

According to a ninth aspect, this application provides a circuit. The circuit is coupled to a memory. The circuit is configured to perform the method shown in any one of the first aspect to the third aspect or the possible implementations of the first aspect to the third aspect. The circuit may include a chip circuit.

### BRIEF DESCRIPTION OF DRAWINGS

FIG. 1 is a diagram of a transmission architecture of an MBS according to an embodiment of this application;
FIG. 2 is a diagram of various types of cells according to an embodiment of this application;
FIG. 3 is a schematic flowchart of a method 100 for transmitting an MII message according to an embodiment of this application;
FIG. 4 is a schematic flowchart of a method 200 for transmitting an MII message according to an embodiment of this application;
FIG. 5 is a schematic flowchart of a method 300 for transmitting an MII message according to an embodiment of this application;
FIG. 6 is a diagram of a structure of a communication apparatus according to an embodiment of this application; and
FIG. 7 is a diagram of a structure of another communication apparatus according to an embodiment of this application.

### DESCRIPTION OF EMBODIMENTS

In embodiments of this application, a network device may also be referred to as an access network device. The access network device may be a device that provides access for a terminal, and may include a radio access network (radio access network, RAN) device and an access node (Access Node, AN) device. The RAN device is mainly a wireless network device in a 3GPP network. The AN device may be an access network device not defined by 3GPP. The RAN device is mainly responsible for functions such as radio resource management, quality of service (quality of service, QoS) management, and data compression and encryption on an air interface side. The RAN device may include base stations in various forms, for example, a macro base station, a micro base station (which may also be referred to as a small cell), a relay station, an access point, and a balloon-mounted base station. In a system using different radio access technologies, a device having a base station function may have different names. For example, in a long term evolution (long term evolution, LTE) system and in a 5^{th} generation (5^{th} generation, 5G), 6^{th} generation (6^{th} generation, 6G), or even 7^{th} generation (7^{th} generation, 7G) system, the network device may be referred to as a RAN or a next-generation node base station (next-generation Node base station, gNB), an evolved NodeB (evolved NodeB, eNB or eNodeB), a network device controller (base station controller, BSC), a network device transceiver station (base transceiver station, BTS), a home network device (for example, a home evolved NodeB or a home NodeB, HNB), a baseband unit (baseband unit, BBU), an access point (access point, AP), a wireless relay node, a wireless backhaul node, a transmission reception point (transmission reception point, TRP), a transmission point (transmission point, TP), or the like in a wireless fidelity (wireless fidelity, Wi-Fi) system, or one or a group of antenna panels (including a plurality of antenna panels) of a network device in a 5G system; or may be a network node that forms a gNB or a transmission point, for example, a baseband unit (BBU), a distributed unit (distributed unit, DU), or a roadside unit (roadside unit, RSU) in a vehicle-to-everything (vehicle-to-everything, V2X) scenario or an intelligent driving scenario.

In some deployments, the gNB or the transmission point may include a central unit (central unit, CU), a DU, and the like. The gNB or the transmission point may further include a radio unit (radio unit, RU). The CU implements some functions of the gNB or the transmission point, and the DU implements some functions of the gNB or the transmission point. For example, the CU implements functions of a radio resource control (radio resource control, RRC) layer and a packet data convergence protocol (packet data convergence protocol, PDCP) layer, and the DU implements functions of a radio link control (radio link control, RLC) layer, a media access control (media access control, MAC) layer, and a physical (physical, PHY) layer. Information at the RRC layer finally becomes information at the physical layer, or is converted from information at the physical layer. Therefore, in this architecture, higher layer signaling such as RRC layer signaling or PDCP layer signaling may also be considered as being sent by the DU, or sent by the DU and the RU. It may be understood that the network device may be a CU node, a DU node, or a device including a CU node and a DU node. Optionally, the network device may alternatively be an auxiliary communication device, for example, a satellite.

In embodiments of this application, the terminal is a device having a wireless transceiver function, and may be a device deployed on land, including an indoor device or an outdoor device, a handheld device, a wearable device, or a vehicle-mounted device, a device deployed on water (for example, on a ship), or a device deployed in the air (for example, on aircraft, a balloon, or a satellite). The terminal may be a mobile phone (mobile phone), a tablet computer (Pad), a computer with a wireless transceiver function, a virtual reality (virtual reality, VR) terminal device, an augmented reality (augmented reality, AR) terminal device, a wireless terminal or a vehicle-mounted terminal device in industrial control (industrial control), a wireless terminal in self-driving (self-driving), a wireless terminal in telemedicine (remote medical care), a wireless terminal in a smart grid (smart grid), a wireless terminal in transportation safety (transportation safety), a wireless terminal in a smart city (smart city), a wireless terminal or a wearable terminal device in a smart home (smart home), or the like. Sometimes, the terminal may also be referred to as a terminal device, user equipment (user equipment, UE), an access terminal device, a vehicle-mounted terminal, an industrial control terminal, a UE unit, a UE station, a mobile station, a remote station, a remote terminal device, a mobile device, a UE agent, a UE apparatus, or the like. The terminal may alternatively be fixed or movable.

This application is applicable to a communication system with various radio access technologies (radio access technologies, RATs), for example, an LTE communication system, a 5G (or referred to as a new radio (new radio, NR)) communication system, or a transition system between an LTE communication system and a 5G communication system. The transition system may also be referred to as a 4.5G communication system, or certainly may be a future communication system, for example, a 6^{th} generation (6^{th} generation, 6G) or even 7^{th} generation (7^{th} generation, 7G) system. The network architecture and the service scenario described in embodiments of this application are intended to describe the technical solutions in embodiments of this application more clearly, and do not constitute a limitation on the technical solutions provided in embodiments of this application. A person of ordinary skill in the art may learn that, with evolution of the communication network architecture and emergence of new service scenarios, the technical solutions provided in embodiments of this application are also applicable to similar technical problems.

To clearly describe the technical solutions in embodiments of this application, terms such as "first" and "second" are used in embodiments of this application to distinguish between same items or similar items whose functions and effects are basically the same. A person skilled in the art may understand that the terms such as "first" and "second" do not limit a quantity or an execution sequence, and the terms such as "first" and "second" do not indicate a definite difference. In embodiments of this application, terms such as "SIB X1" and " SIB X" are used to distinguish between same items or similar items whose functions and effects are basically the same, but the name is not limited. For example, "SIB x1" may be equivalent to "SIB X1", and "SIB x" may be equivalent to "SIB X". A term "and/or" describes only an association relationship between associated objects and indicates that there may be three relationships. For example, A and/or B may represent the following three cases: Only A exists, both A and B exist, and only B exists. The character "/" generally indicates an "or" relationship between the associated objects.

The following describes some concepts in embodiments of this application.

### 1. Transmission architecture of an MBS

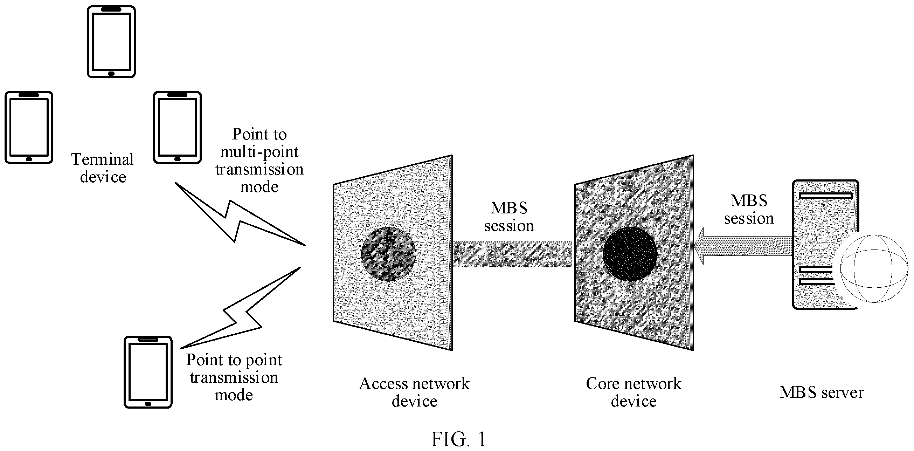

An MBS is a service oriented to a plurality of terminal devices. A transmission architecture of the MBS is shown in FIG. 1 and includes a data server (for example, an MBS server (server)), a core network (Core Network) device, an access network device (for example, a gNB), and at least one terminal device. The data server sends MBS data to the core network device. The core network device sends the MBS data to the access network device. Finally, the access network device sends the MBS data to the at least one terminal device that receives the MBS data.

As shown in FIG. 1, the core network device sends the MBS data to the access network device by using an MBS session (session), and each MBS session may include at least one MBS QoS flow. The access network device sends the MBS data to the terminal device by using an MBS radio bearer. For one MBS radio bearer, there are two transmission modes. As shown in FIG. 1, a first transmission mode may be a point to multi-point (point to multi-point, PTM) transmission mode. The second transmission mode may be a point to point (point to point, PTP) transmission mode.

A broadcast service is designed for a service with a low QoS requirement. All terminal devices in an RRC_CONNECTED state support the broadcast service. The core network device and the terminal device do not need to maintain a terminal device group that receives a related broadcast service. When a broadcast service is provided, the terminal device may autonomously receive the broadcast service based on configuration information.

For example, two steps are required for configuration of a broadcast service. One step is that a terminal needs to receive a system information block (System information block, SIB) that is of a primary cell (primary cell, PCell) and that includes information used for obtaining a multicast and broadcast service control channel (MBS Control Channel, MCCH) configuration of the MBS, and needs to receive a SIB that is of the PCell and that includes a mapping relationship between a frequency and the MBS or an MBS frequency selection area identifier. The other step is that the terminal needs to report an MBS interest indication (MBS Interest Indication, MII) message, to notify a network side of an MBS broadcast service that a terminal device in a radio resource control connected (radio resource control_connected, RRC_CONNECTED) state is receiving or is interested in receiving.

A multicast service is equivalent to a multicast service and is designed for a service with a high QoS requirement. Group management needs to be performed for the multicast service to provide a same or similar QoS level as a unicast service. For the multicast service, a core network needs to manage joining and leaving of terminal devices.

The method for transmitting an MII message described in this application is applicable to the multicast service, the broadcast service, and the like. In addition, the multicast service, the multicast session, and the multicast service are equivalent concepts in this application, and may be replaced with each other. Correspondingly, the broadcast service, the broadcast session, and the broadcast service are also equivalent concepts in this application, and may be replaced with each other.

### 2. SIB X1, SIB X, and MII message

A Name of a SIB including information used for obtaining an MCCH configuration of an MBS and A name of a SIB including a mapping relationship between a frequency and the MBS or an MBS frequency selection area identifier are not limited in this application. For ease of description, the SIB including a mapping relationship between a frequency and the MBS or an MBS frequency selection area identifier is referred to as a SIB X1 for short, and the SIB including information used for obtaining an MCCH configuration of an MBS is referred to as a SIB X for short. X and X1 may be a value, for example, X is 20, and X1 is 21. In this case, the SIB including a mapping relationship between a frequency and the MBS or an MBS frequency selection area identifier is referred to as a SIB 21, and the SIB including information used for obtaining an MCCH configuration of an MBS is referred to as a SIB 20.

An MII message includes at least one of the following:
(1) MBS frequency information, where the MBS frequency information is MBS frequency information of interest to a terminal device, and the information may be referred to as mbs-FreqList for short;
(2) MBS priority information, indicating whether MBS reception of the terminal device takes precedence over unicast reception, where the information may be referred to as mbs-Priority for short; and
(3) Identifier of an MBS service of interest to the terminal device (for example, being receiving or interested in receiving), where the information is referred to as mbs-ServiceList for short.

mbs-ServiceList may be a group of temporary mobile group identities (temporary mobile group identities, TMGIs). Therefore, in this application, an MII message that carries the identifier of the MBS service of interest to the terminal device may be referred to as an MII message of mbs-ServiceList, or may be referred to as an MII message that carries a TMGI list.

The terminal device may notify, by using the MII message, a network side of at least one of an identifier of an MBS service of interest to the terminal device in an RRC_CONNECTED state, MBS frequency information, a priority between MBS reception and unicast reception, and the like.

Sending of the MII message includes three parts: The first part is a triggering mechanism for MII message reporting, the second part is a determining mechanism for MII message reporting, and the third part is a setting mechanism for content of the MII message. When a trigger condition in the first part is satisfied, the terminal device may perform a determining process in the second part, to determine whether to send the MII message. Further, when the MII message is sent, content of the MII message is set according to a setting mechanism in the third part.

A terminal device that is in RRC_CONNECTED and supports the MBS may execute the determining mechanism for MII message reporting when the following triggering mechanism for MII message reporting is satisfied. The following describes at least one condition that may be included in the triggering mechanism for MII message reporting. To be specific, the terminal device may perform related operations of the determining mechanism of the second part when at least one of the following conditions is satisfied:
(1) the terminal device successfully establishes an RRC connection;
(2) the terminal device enters or leaves a cell that provides a broadcast service;
(3) an MBS session starts or stops;
(4) the identifier of the MBS service of interest to the terminal device changes;
(5) a priority between MBS broadcast reception and MBS unicast reception by the terminal device changes; or
(6) the terminal device is connected to a PCell sending a SIB X1.

When at least one condition in the triggering mechanism of the first part, the terminal device may perform a related operation of the determining mechanism of the second part. The following describes a process of the determining mechanism of the second part:
1> if the SIB X1 of the PCell is received,
   2> ensuring that the SIB X1 version of the PCell is valid,
   2> if the terminal device has not sent an MII message since being in the RRC_CONNECTED state last time, or
   2> if the terminal device is connected to a PCell in which no SIB X1 is sent since an MII message is sent last time,
      3> if the MBS frequency information (that is, mbs-FreqList) of interest to the terminal device is not empty, and
         4> setting content of the MII message and sending the MII message;
      2> other:
         3> if MBS frequency information (that is, mbs-FreqList) of interest to the terminal device is different from MBS frequency information (that is, mbs-FreqList) included in an MII message reported last time, or
         3> if a reception priority of an MBS radio bearer and a reception priority of an established unicast bearer change since an MII message is sent last time,
            4> setting content of an MII and sending the MII message;
      3> else if the SIB X of the PCell is received,
         4> if the terminal device is connected to a PCell not broadcasting a SIB X since the terminal device sends the MII message last time, or
         4> if the identifier of the MBS service of interest to the terminal device is different from an identifier that is of an MBS service and that is carried in an MII message sent last time,
         5> setting content of an MII and sending the MII message.

In the process of the determining mechanism of the second part, the terminal device may determine the content of the MII message based on the setting mechanism of the content of the MII message of the third part. The following describes a process of a setting mechanism for content of the MII message:
1> determining that MBS frequency information (that is, mbs-FreqList) of interest to the terminal device is not empty,
   2> including mbs-FreqList in the MII message, sorting mbs-FreqLists in descending order of degrees of interest, and including frequency information in mbs-FreqList,
   2> if the terminal device preferentially receives all MBS radio bearers instead of preferentially receiving any unicast radio bearer and any multicast MRB, including mbs-Priority in the MII message,
   2> if the SIB X of the PCell is received,
      3> including mbs-ServiceList in the MII message, and sorting identifiers of MBS services in mbs-ServiceList in descending order of degrees of interest to the terminal device.

It can be learned that whether the content of the MII message includes the identifier of the MBS service of interest to the terminal device is determined with reference to whether the SIB X of the PCell is received. In other words, if the SIB X of the PCell is received, a reported MII message may include the identifier of the MBS service of interest to the terminal device.

The SIB X of the PCell includes but is not limited to the following description: The SIB X is a SIB X for a multicast service provided by the PCell, the SIB X is a SIB X for a multicast service provided by the PCell, or the SIB X is a SIB X provided for the terminal device to receive a multicast service in the PCell.

Correspondingly, the SIB X1 of the PCell includes but is not limited to the following descriptions: The SIB X1 is a SIB X1 for a multicast service provided by the PCell, the SIB X is a SIB X1 for a multicast service provided by the PCell, or the SIB X1 is a SIB X1 provided for the terminal device to receive a multicast service in the PCell.

### 3. Cell, serving cell, non-serving cell, primary cell, secondary cell, master cell group, and secondary cell group

A cell is described from a perspective of resource management or mobility management by a higher layer (for example, a protocol layer above a physical layer such as a radio resource control layer or a media access control layer). A coverage area of an access network device may be divided into one or more cells. One downlink carrier may be configured for one cell. Optionally, at least one uplink carrier may be configured for one cell. The cell is a common name. For a terminal device, a cell that provides a radio resource for the terminal device is referred to as a serving cell (serving cell). Correspondingly, a cell that does not provide a service for the terminal device is referred to as a non-serving cell (Non-serving cell). For example, a cell that does not provide a radio resource for the terminal device or a cell that does not establish a connection to the terminal device is a non-serving cell.

A PCell in the serving cell is a cell in which the terminal device establishes an initial connection, a cell in which radio resource control (radio resource-control, RRC) connection reestablishment is performed, or a primary cell specified in a handover (handover) process. The PCell is responsible for RRC communication with the terminal device. Another serving cell in the serving cell is referred to as a secondary cell. The secondary cell is a serving cell that is added when the terminal device performs RRC reconfiguration and that is configured to provide an additional radio resource for the terminal device.

Two access network devices connected to the terminal device may be a master access network device and a secondary access network device. A cell covered by each access network device may form one CA group, and the two access network devices may be considered as two CA groups. A CA group covered by the master access network device may be a master cell group (master cell group, MCG). The MCG may carry a control plane and a user plane of the terminal device, may be responsible for sending a service to the terminal device, and may also be responsible for sending control signaling to the terminal device. A CA group covered by the secondary access network device may be referred to as a secondary cell group (secondary cell group, SCG). The SCG may carry a user plane of the terminal device, and may be responsible for sending a service to the terminal device. APCell in the MCG and a SCell in the MCG are combined by using a carrier aggregation (CA, Carrier aggregation) technology. A PSCell in the SCG and a SCell in the SCG are also combined by using the carrier aggregation technology.

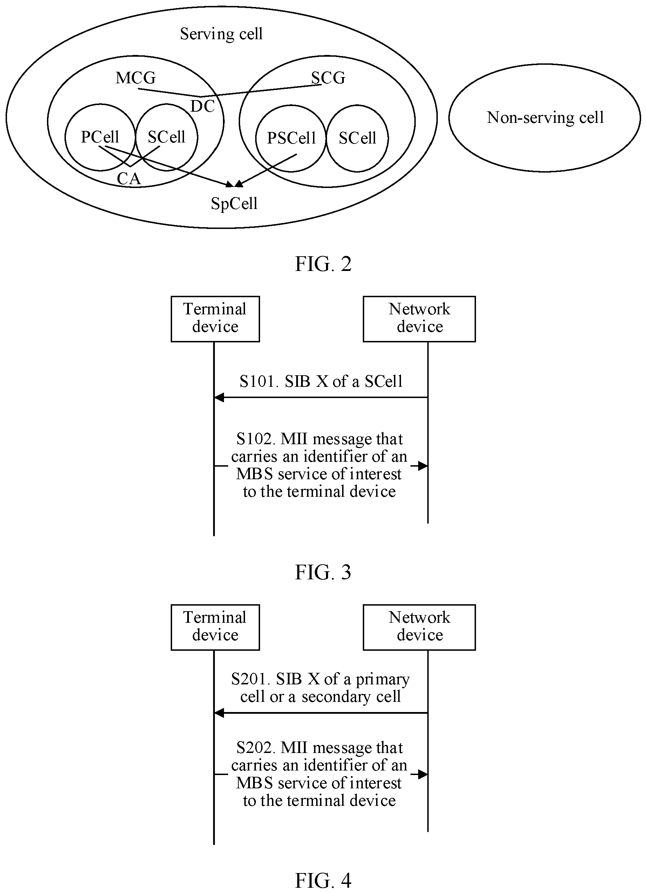

As shown in FIG. 2, cells may be classified into two types: the serving cell and the non-serving cell described above. In addition, in DC, the serving cell may be further classified into an MCG and an SCG. As shown in FIG. 2, a primary cell in the MCG is referred to as a PCell, and another serving cell is referred to as a SCell; and a primary cell in an SCG is referred to as a PSCell, and another serving cell is referred to as a SCell. Optionally, the PCell in the MCG and the PSCell in the SCG may also be referred to as a special cell SpCell.

According to the MII message reporting mechanism of the foregoing three parts, it can be learned that whether the MII message reported by the terminal device carries the identifier of the MBS service of interest to the terminal device depends on whether the SIB X of the PCell is received. However, in a scenario in which the secondary cell may provide a broadcast service, for example, in a case in which only the secondary cell can provide the broadcast service or in which both the PCell and the secondary cell can provide the broadcast service, how a terminal reports the MII message is an urgent problem to be resolved.

This application provides a method 100 for transmitting a multicast and broadcast service interest indication message. In a scenario in which a secondary cell may provide a broadcast service, a terminal device can send, in a timely manner, an MII message that carries an identifier of an MBS service of interest to the terminal device.

The following is described with reference to the accompanying drawings.

FIG. 3 is a schematic flowchart of the method 100 for transmitting an MII message according to this application. As shown in FIG. 3, the method 100 for transmitting an MII message includes but is not limited to the following steps.

S101. A network device sends a SIB X of a SCell. Correspondingly, a terminal device receives the SIB X of the SCell.

The SCell may be one of SCells in an MCG and/or a secondary cell group SCG that provide radio resources for the terminal device, or one of SCells other than a PCell in a serving cell that provides a radio resource for the terminal device.

The SIB X of the SCell indicates: The SIB X is a SIB X for a multicast service provided by the SCell, the SIB X is a SIB X provided for the terminal device to receive a multicast service in the SCell, or the SIB X is a secondary cell system information block SCellSIB X provided for the terminal device to receive a multicast service in the SCell.

S102. The terminal device sends an MII message. The MII message carries an identifier of an MBS service of interest to the terminal device. Correspondingly, the network device receives the MII message.

Optionally, the SIB X of the SCell includes information used for obtaining an MCCH configuration of an MBS. The terminal device may receive, by using an MCCH configured by using the MCCH configuration, an MBS service that can be provided by the SCell. Further, the terminal device may determine, based on the MBS service that can be provided by the SCell, the identifier of the MBS service of interest to the terminal device.

Optionally, the terminal device sets content of the MII message based on the SIB X of the SCell, and mbs-ServiceList carried in the MII message is an identifier of an MBS service of interest to the terminal device in the SCell. Alternatively, mbs-ServiceList carried in the MII message may further include an identifier of an MBS service of interest to the terminal device in the PCell, in addition to an identifier of an MBS service of interest to the terminal device in the SCell. Alternatively, mbs-ServiceList carried in the MII message reported based on the SIB X of the SCell is determined by the terminal device, and mbs-ServiceList carried in the MII message is not limited to being an identifier of an MBS service of interest to the terminal device in a specific cell.

It can be learned that in the method 100 for transmitting an MII message, in a scenario in which a secondary cell can provide a broadcast service, if the SIB X of the SCell is received, an MII message that carries an identifier of an MBS service of interest to the terminal device may also be reported, so that the network side can learn the MBS service of interest to the terminal device.

In an optional implementation, if the terminal device receives the SIB X of the SCell, the second part in which the terminal device performs the mechanism for determining whether to send the MII message may be performed. The following describes several optional implementations of the mechanism for determining, by the terminal device, whether to send the MII message.

Implementation 1-1: If the SIB X of the SCell is received, the terminal device further needs to determine, with reference to whether SIB Xs of all cells in a cell set are received after the MII message is sent last time, whether to send the MII message that carries mbs-ServiceList.

In other words, if the terminal device receives the SIB X of the SCell, and if the terminal device does not receive the SIB Xs of all the cells in the cell set after sending the MII message last time, the terminal device sends the MII message that carries mbs-ServiceList.

The cell set includes one or more cells that provide a radio resource for the terminal device. In a case, the cell set may be all primary cells and secondary cells that provide radio resources for the terminal device. In DC, the cell set may be all cells in the MCG and/or the SCG. In another case, the cell set includes a cell that provides a radio resource for the terminal device before a current moment and a cell that provides a radio resource for the terminal device at the current moment. In still another case, the cell set includes one or more cells that have provided a radio resource for the terminal device after the terminal device sends the MII message last time. In still another case, the cell set includes a cell that provides a radio resource for the terminal device at a current moment. In at least one case of the foregoing cell set, if the SIB X of the SCell is received, and if SIB Xs of all cells in the cell set are not received after the MII message is sent last time, the MII message that carries mbs-ServiceList is sent. In other words, if the terminal device does not receive the SIB Xs of all the cells in the cell set after sending the MII message last time and before currently receiving the SIB X of the SCell, the terminal device sends, if the SIB X of the SCell is received currently, the MII message that carries mbs-ServiceList. It can be learned that in this implementation, once the terminal device receives the SIB X of the SCell, if the terminal device does not receive the SIB Xs of all the cells in the cell set after sending the MII message last time, the terminal device may report the MII message that carries mbs-ServiceList.

For example, the cell set includes a cell 1 and a cell 2 that provide radio resources for the terminal device before the current moment, and a cell 3 that provides a radio resource for the terminal device at the current moment. At a moment T1, when the terminal device camps on the cell 1, the cell 1 provides the SIB X. Therefore, the terminal device may report the MII message that carries mbs-ServiceList. At a moment T2, the terminal device moves from the cell 1 to the cell 2, and the cell 2 does not provide the SIB X. At a moment T3, the terminal device moves from the cell 2 to the cell 3, and the cell 3 provides the SIB X. The cell 1 to the cell 3 are respectively covered by three different access network devices. After the terminal device reports the MII message that carries mbs-ServiceList at the moment T1 and before the moment T3, neither the cell 2 nor the cell 3 provides the SIB X. Therefore, the cell 3 provides the SIB X at the moment T3. The terminal device may report the MII message again that carries mbs-ServiceList. In this way, when the terminal device moves from the cell 1 to the cell 2, the access network device in the cell 1 may forward, to the cell 2, the MII message that carries mbs-ServiceList and that is reported by the terminal device. However, because the cell 2 does not provide the SIB X, possibly because the cell 2 cannot support the MBS, when the terminal device moves to the cell 3, because the terminal device does not identify the MII message, the MII message that carries mbs-ServiceList is not forwarded to a network device of the cell 3. In other words, when the terminal device moves from the cell 2 to the cell 3, an RRC configuration forwarded by an access network device of the cell 2 to the access network device of the cell 3 does not include mbs-ServiceList. However, in a case that the cell 3 supports the MBS, when the terminal device receives the SIB X of the cell 3, the terminal device may report, in a timely manner, the MII message that carries mbs-ServiceList, so as to notify the network side of an identifier of a service of interest to the terminal device, so that the network side can schedule the MBS service for the terminal device in a timely and accurate manner.

For another example, the cell set includes the cell 1, and the terminal device camps on the cell 1 before the current moment. At the moment T1, the cell 1 provides a SIB X1 but does not provide a SIBx. Therefore, the terminal device may report an MII message that does not carry mbs-ServiceList. At the moment T2, the cell 1 starts to provide the SIB X. Before the moment T2 and after the terminal device reports the MII message that does not carry mbs-ServiceList, the cell 1 does not provide the SIB X. Therefore, at the moment T2, the cell 1 provides the SIB X, and the terminal device may report, in a timely manner, the MII message that carries mbs-ServiceList, so as to notify the network side of an identifier of a service of interest to the terminal device, so that the network side can schedule the MBS service for the terminal device in a timely manner.

Implementation 1-2: If the SIB X of the SCell is received, the terminal device further needs to determine, with reference to whether the identifier of the MBS service of interest to the terminal device changes, whether to send the MII message that carries mbs-ServiceList.

In other words, if the terminal device receives the SIB X of the SCell, and if the identifier of the MBS service of interest to the terminal device is different from an identifier that is of an MBS service and that is carried in an MII message sent last time, the terminal device sends the MII message that carries mbs-ServiceList.

Implementation 1-3: If the SIB X of the SCell is received, the terminal device further needs to determine, with reference to whether SIB Xs of all cells in the cell set are received after the MII message is sent last time, and whether the identifier of the MBS service of interest to the terminal device changes, whether to send the MII message that carries mbs-ServiceList.

In other words, if the terminal device receives the SIB X of the SCell, if the terminal device does not receive the SIB Xs of all the cells in the cell set after sending the MII message last time, and if the identifier of the MBS service of interest to the terminal device is different from an identifier that is of an MBS service and that is carried in an MII message sent last time, the terminal device sends the MII message that carries mbs-ServiceList.

This application provides a method 200 for transmitting a multicast and broadcast service interest indication message. In a scenario in which both a primary cell and a secondary cell may provide a broadcast service, a terminal device can send, in a timely manner, an MII message that carries an identifier of an MBS service of interest to the terminal device.

FIG. 4 is a schematic flowchart of the method 200 for transmitting an MII message according to this application. As shown in FIG. 4, the method 200 for transmitting an MII message includes but is not limited to the following steps.

S201. A network device sends a SIB X of the primary cell or the secondary cell. Correspondingly, the terminal device receives the SIB X of the primary cell or the secondary cell.

The primary cell may be a PCell, and the secondary cell is a SCell other than the PCell. In DC, the primary cell may be a PCell in an MCG and/or a PSCell in an SCG, and the secondary cell may be a SCell in the MCG and/or a SCell in the SCG.

The SIB X of the primary cell or the secondary cell indicates: The SIB X is a SIB X for a multicast service provided by the primary cell or the secondary cell, the SIB X is a SIB X for a multicast service provided by the primary cell or the secondary cell, or the SIB X is a SIB X provided for the terminal device to receive a multicast service in the primary cell or the secondary cell.

S202. The terminal device sends an MII message that carries an identifier of an MBS service of interest to the terminal device.

Optionally, the SIB X of the primary cell or the secondary cell includes information used for obtaining an MCCH configuration of an MBS. The terminal device may receive, by using an MCCH configured by using the MCCH configuration, an MBS service that can be provided by the SCell. Further, the terminal device may determine, based on the MBS service that can be provided by the primary cell or the secondary cell, the identifier of the MBS service of interest to the terminal device.

Optionally, the terminal device sets content of the MII message based on the SIB X of the primary cell or the secondary cell, and mbs-ServiceList carried in the MII message is an identifier of an MBS service of interest to the terminal device in the primary cell or the secondary cell. Alternatively, mbs-ServiceList carried in the MII message includes identifiers of MBS services of interest to the terminal device in the primary cell and the secondary cell. Alternatively, mbs-ServiceList carried in the MII message is a union set or an intersection set of an identifier set of MBS services of interest to the terminal device in the primary cell and the secondary cell.

Optionally, if the terminal device receives the SIB X of the secondary cell and reports an MII message that carries an identifier of an MBS service of interest to the terminal device, the identifier that is of the MBS service and that is carried in the MII message is the identifier of the MBS service of interest to the terminal device in the secondary cell. If the terminal device receives the SIB X of the primary cell and reports an MII message that carries an identifier of an MBS service of interest to the terminal device, the identifier that is of the MBS service and that is carried in the MII message is the identifier of the MBS service of interest to the terminal device in the primary cell. If the terminal device receives SIB Xs of the primary cell and the secondary cell and reports an MII message that carries identifiers of MBS services of interest to the terminal device, identifiers that are of the MBS services and that are carried in the MII message are respectively identifiers of MBS services corresponding to mbs-ServiceList of the primary cell and mbs-ServiceList of the secondary cell. In other words, the MII message carries mbs-ServiceList of the primary cell and mbs-ServiceList of the secondary cell.

For a case in which the MII message carries mbs-ServiceList of the primary cell and mbs-ServiceList of the secondary cell, compared with a case in which the MII message carries one mbs-ServiceList, one mbs-ServiceList may be added to the MII message. Optionally, the original mbs-ServiceList may be used as mbs-ServiceList of the primary cell, and the added mbs-ServiceList may be used as mbs-ServiceList of the secondary cell. Optionally, mbs-ServiceList of the secondary cell may be carried in the MII message in an implicit or explicit manner.

In other words, in the method 200 for transmitting an MII message, regardless of whether the terminal device receives the SIB X of the primary cell or the SIB X of the secondary cell, the terminal device may send the MII message that carries the identifier of the MBS service of interest to the terminal device, so that in a scenario in which both the primary cell and the secondary cell may provide a broadcast service, the terminal device can send, in a timely manner, the MII message that carries the identifier of the MBS service of interest to the terminal device.

Optionally, if the terminal device receives the SIB X of the primary cell or the secondary cell, the terminal device may perform the mechanism for determining whether to send an MII message that carries mbs-ServiceList. The following describes several optional implementations of the mechanism for determining whether to send the MII message that carries mbs-ServiceList.

Implementation 2-1: If the SIB X of the primary cell or the secondary cell is received, the terminal device further needs to determine, with reference to whether SIB Xs of all cells in a cell set are received after the MII message is sent last time, whether to send the MII message that carries mbs-ServiceList.

In other words, if the terminal device receives the SIB X of the primary cell or the secondary cell, and if the terminal device does not receive the SIB X of all the cells in the cell set after sending the MII message last time, the terminal device sends the MII message that carries mbs-ServiceList. To be specific, if the terminal device does not receive the SIB Xs of all the cells in the cell set after sending the MII message last time and before currently receiving the SIB X of the primary cell or the secondary cell, the terminal device sends, if the SIB X of the primary cell or the secondary cell is received currently, the MII message that carries mbs-ServiceList. It can be learned that in this implementation, once the terminal device receives the SIB X of the primary cell or the secondary cell, if the terminal device does not receive the SIB Xs of all the cells in the cell set after sending the MII message last time, the terminal device may report the MII message that carries mbs-ServiceList.

Refer to related descriptions in the foregoing implementation 1-1 for related descriptions of the cell set. Details are not described herein again.

For example, the cell set includes a cell 1-1 (primary cell) and a cell 1-2 (secondary cell) that are covered by a network device 1 and that provide radio resources for the terminal device at a moment T1, a cell 2 (primary cell) that is covered by a network device 2 and that provides a radio resource for the terminal device at a moment T2, and a cell 3-1 (primary cell) and a cell 3-2 (secondary cell) that are covered by a network device 3 and that provide radio resources for the terminal device at a current moment. At the moment T1, the terminal device camps on the cell 1-1 and the cell 1-2 served by the network device 1. If the cell 1-1 or the cell 1-2 provides the SIB X, the terminal device may report the MII message that carries mbs-ServiceList. At the moment T2, the terminal device is handed over from the network device 1 to the network device 2, and the cell 2 does not provide the SIB X. At the moment T3, the terminal device is handed over from the network device 2 to the network device 3, the cell 3-1 does not provide the SIB X, and the cell 3-2 provides the SIB X. After the terminal device reports the MII message at the moment T1 and before the moment T3, none of the cell 2, the cell 3-1, and the cell 3-2 provides the SIB X. Therefore, the cell 3-2 provides the SIB X at the moment T3, and the terminal device may report the MII message that carries mbs-ServiceList. In this way, when the terminal device is handed over from the network device 1 to the network device 2, the network device 1 may forward, to the network device 2, the MII message that carries mbs-ServiceList and that is reported by the terminal device. However, because the cell 2 does not provide the SIB X, the network device 2 cannot identify the MII message possibly because the cell 2 does not support the MBS. When the terminal device is handed over to the network device 3, because the network device 2 does not identify the MII message, the network device 2 does not forward, to the network device 3, the MII message that carries mbs-ServiceList. In other words, when the terminal device is handed over from the network device 2 to the network device 3, an RRC configuration forwarded by the network device 2 to the network device 3 does not include mbs-ServiceList. However, in a case that the cell 3-2 supports MBS, when the terminal device can receive the SIB X of the cell 3-2, the terminal device may report, in a timely manner, the MII message that carries mbs-ServiceList, so as to notify the network side of an identifier of a service of interest to the terminal device, so that the network side can schedule the MBS service for the terminal device in a timely manner.

For another example, the cell set includes a cell 1-1 (primary cell) and a cell 1-2 (secondary cell), and the terminal device camps on the cell 1-1 before the current moment. At the moment T1, the cell 1-1 or the cell 1-2 provides a SIB X1 but does not provide a SIBx. Therefore, the terminal device may report an MII message that does not carry mbs-ServiceList. At the moment T2, the cell 1-1 or the cell 1-2 provides the SIB X. Before the moment T2 and after the terminal device reports the MII message that does not carry mbs-ServiceList, neither the cell 1-1 nor the cell 1-2 provides the SIB X. Therefore, at the moment T2, the cell 1-1 or the cell 1-2 provides the SIB X, the terminal device may report, in a timely manner, the MII message that carries mbs-ServiceList, so as to notify the network side of an identifier of a service of interest to the terminal device, so that the network side can schedule the MBS service for the terminal device in a timely manner.

Implementation 2-2: If the SIB X of the primary cell or the secondary cell is received, the terminal device further needs to determine, with reference to whether the identifier of the MBS service of interest to the terminal device changes, whether to send the MII message that carries mbs-ServiceList.

In other words, if the terminal device receives the SIB X of the primary cell or the secondary cell, and if the identifier of the MBS service of interest to the terminal device is different from an identifier that is of an MBS service and that is carried in an MII message sent last time, the terminal device sends the MII message that carries mbs-ServiceList.

Implementation 2-3: If the SIB X of the primary cell or the secondary cell is received, the terminal device further needs to determine, with reference to whether SIB Xs of all cells in the cell set are received after the MII message is sent last time, and whether the identifier of the MBS service of interest to the terminal device changes, whether to send the MII message that carries mbs-ServiceList.

In other words, if the terminal device receives the SIB X of the primary cell or the secondary cell, if the terminal device does not receive the SIB Xs of all the cells in the cell set after sending the MII message last time, and if the identifier of the MBS service of interest to the terminal device is different from an identifier that is of an MBS service and that is carried in an MII message sent last time, the terminal device sends the MII message that carries mbs-ServiceList.

Based on the mechanism in the method for transmitting an MII message in which the terminal device may determine whether to send the MII message if the terminal device receives the SIB X of the primary cell or the secondary cell, the mechanisms in the first part to the third part described above are adaptively modified.

In the first part, the triggering mechanism for MII message reporting is as follows: In this mechanism, in addition to at least one of condition (1) to condition (6) described above that can enable the terminal device to perform the determining mechanism for MII message reporting described in the second part, the mechanism may further include condition (7) that the terminal device receives the SIB X of the primary cell and/or the secondary cell.

Optionally, condition (7) may be that the terminal device is connected to the primary cell and/or the secondary cell in which the SIB X is sent, or may be that the terminal device receives the SIB X of the primary cell and/or the secondary cell for the first time.

In the second part, in the mechanism for determining whether to send the MII message, a process of determining whether to send the MII message that carries the identifier of the MBS service may include but is not limited to the following step:
if the SIB X of the PCell or the SCell is received, and
if SIB Xs of all cells in the cell set are not received since the terminal device sends the MII message last time, or if the identifier of the MBS service of interest to the terminal device is different from an identifier that is of an MBS service and that is carried in an MII message sent last time,
setting content of the MII and sending the MII message, where the MII message carries the identifier of the MBS service.

Optionally, the mechanism in the second part for determining, by the terminal device, whether to report the MII message may include but is not limited to the following process:
1> if the SIB X1 of the PCell or the SCell is received,
   2> ensuring that the SIB X1 version of the PCell or SCell is valid,
   2> if the terminal device has not sent an MII message since being in the RRC_CONNECTED state last time, or
   2> if the terminal device is connected to a PCell in which no SIB X1 is sent since an MII message is sent last time,
      3> if the MBS frequency information (that is, mbs-FreqList) of interest to the terminal device is not empty, and
      4> setting content of the MII message and sending the MII message;
   2> other:
   3> if MBS frequency information (that is, mbs-FreqList) of interest to the terminal device is different from MBS frequency information (that is, mbs-FreqList) included in an MII message reported last time, or
      3> if a reception priority of an MBS radio bearer and a reception priority of an established unicast bearer change since an MII message is sent last time,
         4> setting content of an MII and sending the MII message;
      3> else if the SIB X of the PCell or the SCell is received,
         4> if the terminal device has not received SIB Xs of all cells in the cell set since the terminal device sends an MII message last time, or
         4> if the identifier of the MBS service of interest to the terminal device is different from an identifier that is of an MBS service and that is carried in an MII message sent last time,
         5> setting content of an MII and sending the MII message.

Optionally, in the second part, process steps in the mechanism for determining whether to send the MII message may alternatively be separately run as some steps. For example, process steps in the mechanism for determining whether to send the MII message may only include: if the SIB X of the PCell or the SCell is received, and if SIB Xs of all cells in the cell set are not received since the terminal device sends the MII message last time, setting content of an MII, and sending the MII message, where the MII message carries the identifier of the MBS service. A combination manner of the process steps in the mechanism for determining whether to send the MII message in the second part is not limited in this application.

It should be noted that, in the mechanism for determining whether to report the MII message in the second part, whether the sent MII message carries the identifier of the MBS service (that is, mbs-ServiceList) of interest to the terminal device is determined with reference to whether the SIB X of the PCell or the SCell is received. To be specific, if the SIB X of the PCell or the SCell is received, the sent MII message carries the identifier of the MBS service (that is, mbs-ServiceList) of interest to the terminal device. If the SIB X of the PCell or the SCell is not received, the sent MII message does not carry the identifier of the MBS service (that is, mbs-ServiceList) of interest to the terminal device.

In the third part, the mechanism for setting content of an MII by the terminal device is as follows:
1> determining that MBS frequency information (that is, mbs-FreqList) of interest to the terminal device is not empty,
   2> including mbs-FreqList in the MII message, sorting mbs-FreqLists in descending order of degrees of interest, and including frequency information in mbs-FreqList,
   2> if the terminal device preferentially receives all MBS radio bearers instead of preferentially receiving any unicast radio bearer and any MBS radio bearer, including mbs-Priority in the MII message,
      2> if the SIB X of the PCell or the SCell is received,
      3> including mbs-ServiceList in the MII message, and sorting identifiers of MBS services in mbs-ServiceList in descending order of degrees of interest to the terminal device.

Optionally, mbs-ServiceList carried in the MII message is an identifier of an MBS service of interest to the terminal device in the primary cell or the secondary cell. Alternatively, mbs-ServiceList carried in the MII message includes identifiers of MBS services of interest to the terminal device in the primary cell and the secondary cell. Alternatively, mbs-ServiceList carried in the MII message is a union set or an intersection set of an identifier set of MBS services of interest to the terminal device in the primary cell and the secondary cell.

Optionally, if the terminal device receives the SIB X of the secondary cell and reports an MII message that carries an identifier of an MBS service of interest to the terminal device, the identifier that is of the MBS service and that is carried in the MII message is the identifier of the MBS service of interest to the terminal device in the secondary cell. If the terminal device receives the SIB X of the primary cell and reports an MII message that carries an identifier of an MBS service of interest to the terminal device, the identifier that is of the MBS service and that is carried in the MII message is the identifier of the MBS service of interest to the terminal device in the primary cell. If the terminal device receives the SIB Xs of the primary cell and the secondary cell and reports an MII message that carries identifiers of MBS services of interest to the terminal device, the identifiers that are of the MBS services and that are carried in the MII message are respectively identifiers of MBS services corresponding to mbs-ServiceList of the primary cell and mbs-ServiceList of the secondary cell. In other words, the MII message carries mbs-ServiceList of the primary cell and mbs-ServiceList of the secondary cell.

For a case in which the MII message carries mbs-ServiceList of the primary cell and mbs-ServiceList of the secondary cell, compared with a case in which the MII message carries one mbs-ServiceList, one mbs-ServiceList may be added to the MII message. Optionally, the original mbs-ServiceList may be used as mbs-ServiceList of the primary cell, and the added mbs-ServiceList may be used as mbs-ServiceList of the secondary cell. Optionally, mbs-ServiceList of the secondary cell may be carried in the MII message in an implicit or explicit manner.

For example, it is assumed that after the terminal device enters an RRC_CONNECTED state:
At the moment T1, if the terminal device satisfies at least one of condition (1) to condition (7) in the first part, and the terminal device receives the SIB X1 of the primary cell or the secondary cell, the terminal device performs the process of the mechanism described in step 1> to step 5> in the second part in which the terminal device determines whether to report the MII message. In addition, after step 1> is satisfied, step 2> is performed: if the terminal device has not sent an MII message since being in the RRC_CONNECTED state last time. Therefore, the terminal device may perform step 4>: setting content of the MII message and sending the MII message. Refer to the mechanism for setting content of an MII described in the third part for setting content of the MII message by the terminal device: Because the SIB X1 of the primary cell or the secondary cell is received at the moment T1, and the SIB X is not received, the set content of the MII message includes mbs-FreqList and mbs-Priority, but does not include mbs-ServiceList. Further, the terminal device sends an MII message that carries mbs-FreqList and mbs-Priority.

At the moment T2, if the terminal device satisfies at least one of condition (1) to condition (7) in the first part, and the terminal device receives the SIB X of the primary cell or the secondary cell, the terminal device performs the process of the mechanism described in step 1> to step 5> in the second part in which the terminal device determines whether to report the MII message. In addition, after step 1> is satisfied, because conditions of step 2> and 2> other are not satisfied, step 3> is performed: else if the SIB X of the PCell or the SCell is received, and step 4>: if the terminal device has not received SIB Xs of all cells in the cell set since the terminal device sends an MII message last time is satisfied, the terminal device may perform step 5>: setting content of the MII message and sending the MII message. Refer to the mechanism for setting content of an MII described in the third part for setting content of the MII message by the terminal device: Because the SIB X of the primary cell or the secondary cell is received at the moment T2, the set content of the MII message includes mbs-FreqList, mbs-Priority, and mbs-ServiceList. Further, the terminal device sends an MII message that carries mbs-FreqList, mbs-Priority, and mbs-ServiceList.

Optionally, receiving, by the terminal device, the SIB X1 of the primary cell or the secondary cell at the moment T1 may satisfy condition (6) in the first part. Therefore, the terminal device performs the process of the mechanism described in step 1> to step 5> in the second part in which the terminal device determines whether to report the MII message.

Optionally, receiving, by the terminal device, the SIB X of the primary cell or the secondary cell at the moment T2 may satisfy condition (7) in the first part. Therefore, the terminal device performs the process of the mechanism described in step 1> to step 5> in the second part in which the terminal device determines whether to report the MII message.

For another example, it is assumed that after the terminal device enters an RRC_CONNECTED state:
At the moment T1, if the terminal device satisfies at least one of condition (1) to condition (7) in the first part, and the terminal device receives the SIB X1 and the SIB X of the primary cell or the secondary cell, the terminal device performs the process of the mechanism described in step 1> to step 5> in the second part in which the terminal device determines whether to report the MII message. In addition, after step 1> is satisfied, step 2> is performed: if the terminal device has not sent an MII message since being in the RRC_CONNECTED state last time, the terminal device may perform step 4>: setting content of the MII message and sending the MII message. Refer to the mechanism for setting content of an MII described in the third part for setting content of the MII message by the terminal device: Because the SIB X1 of the primary cell or the secondary cell is received at the moment T1, and the SIB X is also received, the set content of the MII message includes mbs-FreqList, mbs-Priority, and mbs-ServiceList. Further, the terminal device sends an MII message that carries mbs-FreqList, mbs-Priority, and mbs-ServiceList.

At the moment T2, if the terminal device satisfies at least one of condition (1) to condition (7) in the first part, and the terminal device can still receive the SIB X1 and the SIB X of the primary cell or the secondary cell, the terminal device performs the process of the mechanism described in step 1> to step 5> in the second part in which the terminal device determines whether to report the MII message. In addition, after step 1> is satisfied, because the conditions of step 2> and other steps are not satisfied, the step of setting content of the MII message and sending the MII message cannot be performed. Therefore, the terminal device no longer sends the MII message.

Optionally, receiving, by the terminal device, the SIB X1 and the SIB X of the primary cell or the secondary cell at the moment T1 may satisfy condition (7) in the first part. Therefore, the terminal device performs the process of the mechanism described in step 1> to step 5> in the second part in which the terminal device determines whether to report the MII message.

Optionally, receiving, by the terminal device, the SIB X1 and the SIB X of the primary cell or the secondary cell at the moment T2 may satisfy condition (7) in the first part. Therefore, the terminal device performs the process of the mechanism described in step 1> to step 5> in the second part in which the terminal device determines whether to report the MII message.

The following describes, based on various expression manners of the primary cell or the secondary cell, possible implementations of a process of determining whether to send the MII message that carries the identifier of the MBS service.

### Implementation 3-1:

if the SIB X of the PCell or the SCell is received (else if SIBx is provided by the PCell or SCell),
if SIB Xs of the PCell and all available SCells are not received after the MII message is sent last time (if since the last time the UE transmitted the MBS Interest Indication, the UE connected to a PCell not broadcasting SIBx and all SCells (if available) also not provided SIBx), or
if the determined identifier of the MBS service of interest to the terminal device is different from an identifier that is of an MBS service and that is carried in an MII message sent last time (if the set of MBS broadcast services of interest determined is different from mbs-ServiceList included in the last transmission of the MBS Interest Indication),
setting content of the MII message and triggering sending of the MII message (set the contents of MBS Interest Indicationand initiate the transmission of MBSInterestIndication message).

The determined identifier of the MBS service of interest to the terminal device may be determined based on a mechanism of setting a service list, and setting the content of the MII message may be determined based on the mechanism of setting the content of the MII.

### Implementation 3-2 is described for the MCG:

if a SIB X of one of cells in the MCG is received (else if SIBx is provided by one cell of the MCG),
if SIB Xs of all cells in the MCG are not received after an MII message is sent last time (if since the last time the UE transmitted the MBS Interest Indication, the UE connected to all cells of MCG not broadcasting SIBx), or
if the determined identifier of the MBS service of interest to the terminal device is different from an identifier that is of an MBS service and that is carried in an MII message sent last time (if the set of MBS broadcast services of interest determined is different from mbs-ServiceList included in the last transmission of the MBS Interest Indication),
setting content of the MII message and triggering sending of the MII message (set the contents of MBS Interest Indicationand initiate the transmission of MBSInterestIndication message).

### Implementation 3-3 is described for the MCG:

if the SIB X of the PCell or the SIB X of the SCell in the MCG is received (else if SIBx is provided by the PCell or SCell of MCG),
if the SIB X of the PCell and SIB Xs of all SCells in the MCG are not received after an MII message is sent last time (if since the last time the UE transmitted the MBS Interest Indication, the UE connected to a PCell and all cells of SCells in MCG not broadcasting SIBx), or
4> if the determined identifier of the MBS service of interest to the terminal device is different from an identifier that is of an MBS service and that is carried in an MII message sent last time (if the set of MBS broadcast services of interest determined is different from mbs-ServiceList included in the last transmission of the MBS Interest Indication),
setting content of the MII message and triggering sending of the MII message (set the contents of MBS Interest Indication and initiate the transmission of MBSInterestIndication message).

### Implementation 3-4:

if a SIB X of a serving cell is received (else if SIBx is provided by serving cell(s)),
if SIB Xs of all serving cells are not received after an MII message is sent last time (if since the last time the UE transmitted the MBS Interest Indication, the UE connected to all cell of serving cell(s) not broadcasting SIBx), or
if the determined identifier of the MBS service of interest to the terminal device is different from an identifier that is of an MBS service and that is carried in an MII message sent last time (if the set of MBS broadcast services of interest determined is different from mbs-ServiceList included in the last transmission of the MBS Interest Indication),
setting content of the MII message and triggering sending of the MII message (set the contents of MBS Interest Indication and initiate the transmission of MBSInterestIndication message).

### Implementation 3-5:

if a SIB X of at least one of serving cells is received (else if SIBx is provided by at least one cell of serving cell(s)),
if SIB Xs of all serving cells are not received after an MII message is sent last time (if since the last time the UE transmitted the MBS Interest Indication, the UE connected to all cell of serving cell(s) not broadcasting SIBx), or
if the determined identifier of the MBS service of interest to the terminal device is different from an identifier that is of an MBS service and that is carried in an MII message sent last time (if the set of MBS broadcast services of interest determined is different from mbs-ServiceList included in the last transmission of the MBS Interest Indication),
setting content of the MII message and triggering sending of the MII message (set the contents of MBS Interest Indication and initiate the transmission of MBSInterestIndication message).

### Implementation 3-6 is described for the MCG:

if the SIB X of the MCG is received (else if SIBx is provided by MCG),
if SIB Xs of all cells in the MCG are not received after an MII message is sent last time (if since the last time the UE transmitted the MBS Interest Indication, the UE connected to all cell of MCG not broadcasting SIBx), or
if the determined identifier of the MBS service of interest to the terminal device is different from an identifier that is of an MBS service and that is carried in an MII message sent last time (if the set of MBS broadcast services of interest determined is different from mbs-ServiceList included in the last transmission of the MBS Interest Indication),
setting content of the MII message and triggering sending of the MII message (set the contents of MBS Interest Indication and initiate the transmission of MBSInterestIndication message).

### Implementation 3-7 is described for the MCG:

if a SIB X of at least one cell in the MCG is received (else if SIBx is provided by at least one cell of MCG),
if SIB Xs of all cells in the MCG are not received after an MII message is sent last time (if since the last time the UE transmitted the MBS Interest Indication, the UE connected to all cell of MCG not broadcasting SIB X), or
if the determined identifier of the MBS service of interest to the terminal device is different from an identifier that is of an MBS service and that is carried in an MII message sent last time (if the set of MBS broadcast services of interest determined is different from mbs-ServiceList included in the last transmission of the MBS Interest Indication),
setting content of the MII message and triggering sending of the MII message (set the contents of MBS Interest Indication and initiate the transmission of MBSInterestIndication message).

### Implementation 3-8 is described for the MCG:

if the SIB X of the PCell or the SCell in the MCG is received (else if SIB X is provided for the PCell or SCell of MCG),
if SIB Xs of all cells in the MCG are not received after an MII message is sent last time (if since the last time the UE transmitted the MBS Interest Indication, the UE connected to all cell of MCG not broadcasting SIB X), or
if the determined identifier of the MBS service of interest to the terminal device is different from an identifier that is of an MBS service and that is carried in an MII message sent last time (if the set of MBS broadcast services of interest determined in accordance with 5.x.4.4 is different from mbs-ServiceList included in the last transmission of the MBS Interest Indication),
setting content of the MII message and triggering sending of the MII message (set the contents of MBS Interest Indication according to 5.x.4.5 and initiate the transmission of MBSInterestIndication message).

### Implementation 3-9:

if a SIB X of the PCell or a ScellSIB X of the SCell is received (else if SIBx is provided for the PCell, or ScellSIBx is provided for the SCell),
if a SIB X of the PCell and a ScellSIB X of the SCell are not received after an MII message is sent last time (if since the last time the UE transmitted the MBS Interest Indication, the UE connected to PCell not broadcasting SIB X and SCell not broadcasting ScellSIB X), or
if the determined identifier of the MBS service of interest to the terminal device is different from an identifier that is of an MBS service and that is carried in an MII message sent last time (if the set of MBS broadcast services of interest determined is different from mbs-ServiceList included in the last transmission of the MBS Interest Indication),
5> setting content of the MII message and triggering sending of the MII message (set the contents of MBS Interest Indication according to 5.x.4.5 and initiate the transmission of MBSInterestIndication message).

### Implementation 3-10 is described for the MCG:

3> if a SIB X of the PCell or a ScellSIB X of the SCell in the MCG is received (else if SIBx is provided for the PCell, or ScellSIBx is provided for the SCell of MCG),
4> if the SIB X of the PCell and the ScellSIB X of the SCell are not received after the MII message is sent last time (if since the last time the UE transmitted the MBS Interest Indication, the UE connected to PCell not broadcasting SIB X and all SCells in MCG not broadcasting ScellSIB X), or
4> if the determined identifier of the MBS service of interest to the terminal device is different from an identifier that is of an MBS service and that is carried in an MII message sent last time (if the set of MBS broadcast services of interest determined is different from mbs-ServiceList included in the last transmission of the MBS Interest Indication),
setting content of the MII message and triggering sending of the MII message (set the contents of MBS Interest Indication and initiate the transmission of MBSInterestIndication message).

### Implementation 3-11:

if a SIB X or a ScellSIB X of the serving cell is received (else if SIBx or ScellSIBx is provided by serving cell(s)),
if SIB Xs or ScellSIB Xs of all serving cells are not received after an MII message is sent last time (if since the last time the UE transmitted the MBS Interest Indication, the UE connected to all of serving cell(s) not broadcasting SIB X and/or ScellSIB X), or
if the determined identifier of the MBS service of interest to the terminal device is different from an identifier that is of an MBS service and that is carried in an MII message sent last time (if the set of MBS broadcast services of interest determined is different from mbs-ServiceList included in the last transmission of the MBS Interest Indication),
setting content of the MII message and triggering sending of the MII message (set the contents of MBS Interest Indication and initiate the transmission of MBSInterestIndication message).

### Implementation 3-12:

if a SIB X or a ScellSIB X of at least one of the serving cells is received (else if SIBx or ScellSIBx is provided by at least on cell),
if SIB Xs or ScellSIB Xs of all serving cells are not received after an MII message is sent last time (if since the last time the UE transmitted the MBS Interest Indication, the UE connected to all of cell(s) not broadcasting SIB X and ScellSIB X), or
if the determined identifier of the MBS service of interest to the terminal device is different from an identifier that is of an MBS service and that is carried in an MII message sent last time (if the set of MBS broadcast services of interest determined is different from mbs-ServiceList included in the last transmission of the MBS Interest Indication),
setting content of the MII message and triggering sending of the MII message (set the contents of MBS Interest Indication and initiate the transmission of MBSInterestIndication message).

### Implementation 3-13 is described for the MCG:

if a SIB X or a SCellSIB X of at least one cell in the MCG is received (else if SIBx or ScellSIBx is provided by at least one cell of MCG),
if SIB Xs and ScellSIBxs of all cells in the MCG are not received after an MII message is sent last time (if since the last time the UE transmitted the MBS Interest Indication, the UE connected to all cell of MCG not broadcasting SIB X and ScellSIBx), or
if the determined identifier of the MBS service of interest to the terminal device is different from an identifier that is of an MBS service and that is carried in an MII message sent last time (if the set of MBS broadcast services of interest determined is different from mbs-ServiceList included in the last transmission of the MBS Interest Indication),
setting content of the MII message and triggering sending of the MII message (set the contents of MBS Interest Indication and initiate the transmission of MBSInterestIndication message).

### Implementation 3-14 is described for the MCG:

if a SIB X or a SCellSIB X of the MCG is received (else if SIBx or ScellSIBx is provided by MCG),
if SIB Xs and ScellSIBxs of all cells in the MCG are not received after an MII message is sent last time (if since the last time the UE transmitted the MBS Interest Indication, the UE connected to all cell of MCG not broadcasting SIBx and/or ScellSIBx), or
if the determined identifier of the MBS service of interest to the terminal device is different from an identifier that is of an MBS service and that is carried in an MII message sent last time (if the set of MBS broadcast services of interest determined is different from mbs-ServiceList included in the last transmission of the MBS Interest Indication),
setting content of the MII message and triggering sending of the MII message (set the contents of MBS Interest Indication and initiate the transmission of MBSInterestIndication message).

### Implementation 3-15:

if a SIB X or a SCellSIB X is received (else if SIBx or ScellSIBx is provided),
if SIB Xs and ScellSIBxs of all cells in the MCG are not received after an MII message is sent last time (if since the last time the UE transmitted the MBS Interest Indication, the UE connected to all cell not broadcasting SIBx and ScellSIBx), or
if the determined identifier of the MBS service of interest to the terminal device is different from an identifier that is of an MBS service and that is carried in an MII message sent last time (if the set of MBS broadcast services of interest determined is different from mbs-ServiceList included in the last transmission of the MBS Interest Indication),
setting content of the MII message and triggering sending of the MII message (set the contents of MBS Interest Indication and initiate the transmission of MBSInterestIndication message).

It should be noted that the implementations 3 to 15 do not limit a serving cell or a non-serving cell through which the terminal device receives the SIB X or the SCellSIB X. To be specific, the terminal device may receive the SIB X or the SCellSIB X through a serving cell, or may receive the SIB X or the SCellSIB X through a non-serving cell.

This application provides a method 300 for transmitting a multicast and broadcast service interest indication message, so that a terminal device can send, in a timely manner, an MII message that carries an identifier of an MBS service of interest to the terminal device.

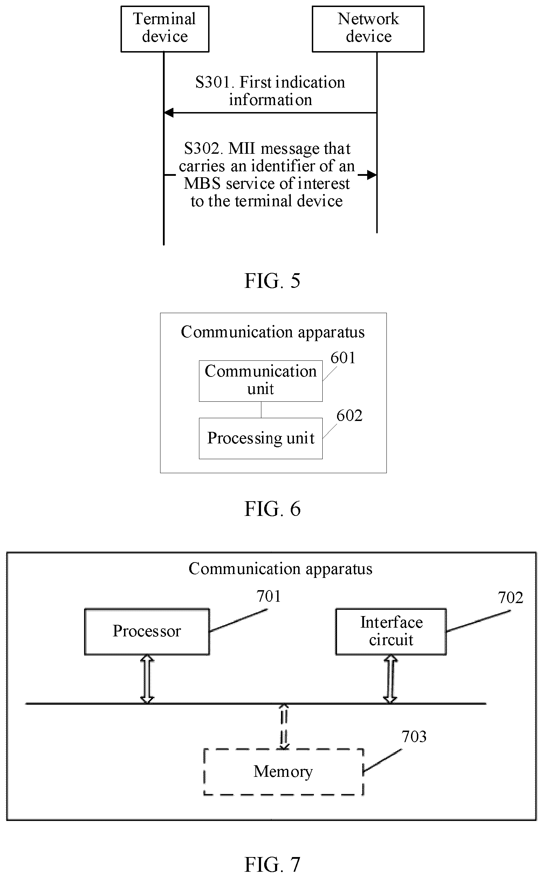

FIG. 5 is a schematic flowchart of the method 300 for transmitting an MII message according to this application. As shown in FIG. 5, the method 300 for transmitting an MII message includes but is not limited to the following steps.

S301. A network device sends first indication information. Correspondingly, the terminal device receives the first indication information. The first indication information indicates a communication apparatus to report an identifier of a multicast and broadcast service MBS service.

Optionally, the first indication information indicates the terminal device to report the MII message that carries the identifier of the MBS service of interest to the terminal device.

S302. The terminal device sends the MII message that carries the identifier of the MBS service of interest to the terminal device. Correspondingly, the network device receives the MII message. It can be learned that in the method 300 for transmitting an MII message, the network device explicitly indicates that the terminal device needs to report the MII message that carries the identifier of the MBS service of interest to the terminal device. If the network device requires the terminal device to report the MII message that carries the identifier of the MBS service of interest to the terminal device, the network device sends the first indication information. If the network device does not require the terminal device to report the MII message that carries the identifier of the MBS service of interest to the terminal device, the network device sends indication information indicating that the terminal device does not need to report the identifier of the MBS service, or it is considered by default or specified that if the terminal device does not receive the first indication information, the terminal device does not report the MII message that carries the identifier of the MBS service of interest to the terminal device.

**In** an optional implementation, the first indication information is carried in a system message. For example, an indication indicating whether all UEs in a cell need to report the MII message is introduced into the system message. In this way, if a network does not have the MII message forwarded by another network device, the network sends the indication indicating that all UEs in the cell need to report the MII message. For another example, in the system message, some information elements (information elements, IEs) or fields may be used for implicit indication, or the first indication information is configured to be periodically reported, to indicate whether the MII message needs to be reported. In this way, when accessing the cell, the terminal device does not need to perform determining by itself, and can learn, by reading the system message sent by the network device, whether the MII message needs to be reported or whether an MII message including mbs-FreqList needs to be reported.

**In** another optional implementation, the first indication information is received through dedicated signaling. In this way, when a network side has MII messages of some terminal devices but does not have MII messages of other terminal devices, the network device may accurately indicate, based on the dedicated signaling, the other terminal devices to report the MII messages. In this way, when accessing the cell, the terminal device does not need to perform determining by itself, and can learn, by reading the dedicated signaling sent by the network device, whether the MII message needs to be reported or whether an MII message including mbs-FreqList needs to be reported. When the network device has an MII message of the terminal device, the network device may not indicate the terminal device to report the MII message. The first indication information may be implicitly indicated or explicitly indicated by using some IEs or fields in the dedicated signaling.

Based on the mechanism in the method 300 for transmitting an MII message in which the first indication information may trigger the terminal device to determine whether to send the MII message, the mechanisms in the first part to the third part described above are adaptively modified.

In the first part, the triggering mechanism for MII message reporting is as follows: In this mechanism, in addition to at least one of condition (1) to condition (6) described above that can enable the terminal device to perform the determining mechanism for MII message reporting described in the second part, the mechanism may further include condition (7) that the terminal device receives a SIB X of a primary cell or a secondary cell, and/or condition (8) that the terminal device receives the first indication information.

Optionally, condition (7) may be that the terminal device is connected to the primary cell and/or the secondary cell in which the SIB X is sent, or may be that the terminal device receives the SIB X of the primary cell and/or the secondary cell for the first time.

In the second part, the mechanism for determining whether to send the MII message is as follows:

In an optional implementation, a process of determining whether to send the MII message that carries the identifier of the MBS service may include:
if the first indication information is received, where the first indication information indicates the terminal device to report an identifier of a multicast and broadcast service MBS service (else if MII-ind is provided), or
if the determined identifier of the MBS service of interest to the terminal device is different from an identifier that is of an MBS service and that is carried in an MII message sent last time (if the set of MBS broadcast services of interest determined is different from mbs-ServiceList included in the last transmission of the MBS Interest Indication),
setting content of the MII message and trigger sending of the MII message (set the contents of MBS Interest Indication and initiate the transmission of MBSInterestIndication message).

MII-ind represents the first indication information.

In another optional implementation, a process of determining whether to send the MII message that carries the identifier of the MBS service may include:
if the first indication information is received, where the first indication information indicates the terminal device to report an identifier of a multicast and broadcast service MBS service (else if MII-ind is provided), and
if an MCG does not send (or indicate) the first indication information after the MII message is sent last time (if since the last time the UE transmitted the MBS Interest Indication, the UE connected to MCG not indicating MII-ind), or
if the determined identifier of the MBS service of interest to the terminal device is different from an identifier that is of an MBS service and that is carried in an MII message sent last time (if the set of MBS broadcast services of interest determined is different from mbs-ServiceList included in the last transmission of the MBS Interest Indication),
setting content of the MII message and triggering sending of the MII message (set the contents of MBS Interest Indication and initiate the transmission of MBSInterestIndication message).

Correspondingly, in the third part, the mechanism for setting the content of an MII message by the terminal device is as follows:
if the first indication information is received (if MII-ind is scheduled),
the MII message includes the determined mbs-ServiceList, and identifiers of MBS services in mbs-ServiceList are sorted in descending order of degrees of interest to the terminal device (include mbs-ServiceList and set it to indicate the set of MBS services of interest sorted by decreasing order of interest determined).

MII-ind represents the first indication information.

This application further provides a method 400 for transmitting an MII message. In the method 400 for transmitting an MII message, the method 100 for transmitting an MII message may be combined with the method 400 for transmitting an MII message. To be specific, if a SIB X of a SCell is received, it is determined, with reference to whether first indication information is received, whether to send an MII message that carries mbs-ServiceList.

For example, if the SIB X of the SCell is received, and if the first indication information is received, the MII message that carries mbs-ServiceList is sent.

For another example, if a terminal device receives the SIB X of the SCell, and if the terminal device receives the first indication information or if an identifier of an MBS service of interest to the terminal device is different from an identifier that is of an MBS service and that is carried in an MII message sent last time, the terminal device sends the MII message that carries mbs-ServiceList.

Optionally, refer to related descriptions of the method 100 for transmitting an MII message and the method 400 for transmitting an MII message for another possible implementation. Details are not described herein again.

This application further provides a method 500 for transmitting an MII message. In the method 500 for transmitting an MII message, the method 200 for transmitting an MII message may be combined with the method 400 for transmitting an MII message. To be specific, if a SIB X of a SCell or a PCell is received, it is determined, with reference to whether first indication information is received, whether to send an MII message that carries mbs-ServiceList.

For example, if the SIB X of the SCell or the PCell is received, and if the first indication information is received, the MII message that carries mbs-ServiceList is sent.

For another example, if a terminal device receives the SIB X of the SCell or the PCell, and if the terminal device receives the first indication information or if an identifier of an MBS service of interest to the terminal device is different from an identifier that is of an MBS service and that is carried in an MII message sent last time, the terminal device sends the MII message that carries mbs-ServiceList.

Optionally, refer to related descriptions of the method 200 for transmitting an MII message and the method 400 for transmitting an MII message for another possible implementation. Details are not described herein again.

This application further provides a method 600 for transmitting an MII message. In the method 600 for transmitting an MII message, if SIB Xs of a SCell and a PCell are received, it may be considered to trigger sending of the MII message, and send an MII message that carries mbs-ServiceList. To be specific, in the method 600 for transmitting an MII message, the "SIB X of a primary cell or a secondary cell" in the method 200 for transmitting an MII message may be modified to the "SIB Xs of the primary cell and the secondary cell". Optionally, refer to related descriptions of the method 200 for transmitting an MII message for another possible implementation. Details are not described herein again.

In the foregoing embodiments, descriptions of embodiments have respective focuses. To avoid redundancy, refer to related descriptions in other embodiments for a part that is not described in detail in an embodiment. In addition, a combination layout between various implementations and optional implementations of other content includes but is not limited to the combination layout of the foregoing embodiments. It is explicitly and implicitly understood by a person skilled in the art that embodiments described in this application may be combined with other embodiments.

To implement functions of any method in the communication methods provided in embodiments of this application, the access network device, the user equipment, or the core network device may separately include a hardware structure and a software module, and implement the foregoing functions in a form of the hardware structure, the software module, or a combination of the hardware structure and the software module. One of the foregoing functions may be performed through a hardware structure, a software module, or a combination of the hardware structure and the software module. FIG. 6 and FIG. 7 are diagrams of a possible structure of a communication apparatus according to an embodiment of this application. The communication apparatus may be configured to implement functions of the terminal or the network device in the foregoing method embodiments. Therefore, beneficial effects of the foregoing method embodiments can also be implemented.

The communication apparatus shown in FIG. 6 may include a communication unit 601. The communication unit 601 may include a sending unit and a receiving unit. The sending unit is configured to implement a sending function. The receiving unit is configured to implement a receiving function. The communication unit 601 may implement the sending function and/or the receiving function. The communication unit may also be described as a transceiver unit.

The communication apparatus shown in FIG. 6 may be a terminal device, or may be an apparatus in a terminal device.

In an optional implementation, the communication apparatus may implement related operations of the terminal device in the method 100 for transmitting an MII message. The communication unit 601 is configured to receive a system information block SIB of a secondary cell SCell, where the SIB includes information used for obtaining a multicast and broadcast service MBS control channel MCCH configuration of a multicast and broadcast service. The communication unit 601 is further configured to send a multicast and broadcast service interest indication MII message, where the MII message carries an identifier of an MBS service of interest to the communication apparatus.

Optionally, the communication apparatus shown in FIG. 6 may include a processing unit 602, configured to set content of the MII message.

Refer to related descriptions in the foregoing method embodiments for more detailed descriptions of the processing unit 602 and the communication unit 601.

In another optional implementation, the communication apparatus may implement related operations of the terminal device in the method 200 for transmitting an MII message. The communication unit 601 is configured to receive a system information block SIB of a secondary cell or a primary cell, where the SIB includes information used for obtaining a multicast and broadcast service control channel MCCH configuration of a multicast and broadcast service MBS. The communication unit 601 is further configured to send a multicast and broadcast service interest indication MII message, where the MII message carries an identifier of an MBS service of interest to the communication apparatus.

Optionally, the communication apparatus shown in FIG. 6 may include a processing unit 602, configured to set content of the MII message.

Refer to related descriptions in the foregoing method embodiments for more detailed descriptions of the processing unit 602 and the communication unit 601.

In still another optional implementation, the communication apparatus may implement related operations of the terminal device in the method 300 for transmitting an MII message. The communication unit 601 is configured to receive first indication information. The first indication information indicates the communication apparatus to report an identifier of a multicast and broadcast service MBS service. The communication unit 601 is further configured to send a multicast and broadcast service interest indication MII message. The MII message carries an identifier of an MBS service of interest to the communication apparatus.

Optionally, the communication apparatus shown in FIG. 6 may include a processing unit 602, configured to set content of the MII message.

Refer to related descriptions in the foregoing method embodiments for more detailed descriptions of the processing unit 602 and the communication unit 601.

The communication apparatus shown in FIG. 6 may be a network device, or may be an apparatus in a network device.

In another optional implementation, the communication apparatus may implement related operations of the network device in the method 300 for transmitting an MII message. The communication unit 601 is configured to send first indication information. The first indication information indicates a terminal device to report an identifier of a multicast and broadcast service MBS service. The communication unit 601 is further configured to receive a multicast and broadcast service interest indication MII message. The MII message carries an identifier of an MBS service of interest to the terminal device.

Refer to related descriptions in the foregoing method embodiments for more detailed descriptions of the communication unit 601.

The communication apparatus shown in FIG. 7 may include a processor 701 and an interface circuit 702. The processor 701 and the interface circuit 702 are coupled to each other. It may be understood that the interface circuit 702 may be an interface circuit or an input/output interface. Optionally, the communication apparatus shown in FIG. 7 may further include a memory 703, configured to store an instruction executed by the processor 701, store input data required by the processor 701 to run an instruction, or store data generated after the processor 701 runs an instruction.

The communication apparatus is a terminal device or an apparatus in a terminal device. The interface circuit 702 performs S101 in FIG. 3, and the processor may set content of an MII message. Alternatively, the interface circuit 702 performs S201 in FIG. 4, and the processor 701 may set content of an MII message. Alternatively, the interface circuit 702 performs S301 in FIG. 5, and the processor 701 may set content of an MII message.

The communication apparatus is a network device or an apparatus in a network device. The interface circuit 702 performs the operation in FIG. 3 of sending a SIB X of a SCell, the operation in FIG. 4 of sending a SIB X of the primary cell or the secondary cell, or the operation in FIG. 5 of sending first indication information.

When the communication apparatus is a module used in the network device, the module in the network device implements functions of the network device in the foregoing method embodiments. The module in the network device receives information from another module (for example, a radio frequency module or an antenna) in the network device, where the information is sent by a terminal to the network device. Alternatively, the module in the network device sends information to another module (for example, a radio frequency module or an antenna) in the network device, where the information is sent by the network device to a terminal. The module in the network device herein may be a baseband chip of the network device, or may be a DU or another module. The DU herein may be a DU in an open radio access network (open radio access network, O-RAN) architecture.

It should be understood that the processor mentioned in embodiments of this application may be a CPU, or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It may be understood that the memory mentioned in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. By way of example, and not limitation, RAMs in many forms may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or transistor logic device, or a discrete hardware component, the memory (a storage module) is integrated into the processor.

It should be noted that the memory described in this specification is intended to include but is not limited to these memories and any other suitable types of memories.

It should be understood that sequence numbers of the foregoing processes do not mean an execution sequence in various embodiments of this application. The execution sequence of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, modules and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and module, refer to a corresponding process in the foregoing method embodiments. Details are not described herein again.

In the several embodiments provided in this application, it should be understood that the disclosed communication method and apparatus may be implemented in other manners. For example, the described apparatus embodiment is merely an example. For example, the module division is merely logical function division and may be other division in actual implementation. For example, a plurality of modules or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The modules described as separate components may or may not be physically separate, and components displayed as modules may or may not be physical modules, that is, may be located in one place or may be distributed over a plurality of network units. Some or all of the units may be selected based on actual requirements to achieve the objectives of the solutions of embodiments.

In addition, functional modules in embodiments of this application may be integrated into one processing module, or each of the modules may exist alone physically, or two or more modules may be integrated into one module.

When the functions are implemented in a form of a software functional module and sold or used as an independent product, the functions may be stored in a computer-readable storage medium. Based on such an understanding, the technical solutions of this application essentially, or a part making contributions, or some of the technical solutions may be implemented in a form of a software product. A computer software product is stored in a storage medium and includes several instructions for instructing a computer device (which may be a personal computer, a server, a network device, or the like) to perform all or some of the steps of the methods described in embodiments of this application. The computer-readable storage medium may be any usable medium that can be accessed by a computer. This is used as an example but is not limited to: a computer-readable storage medium may include a random access memory (random access memory, RAM), a read-only memory (read-only memory, ROM), an electrically erasable programmable read-only memory (electrically erasable programmable read-only memory, EEPROM), and a compact disc read-only memory (compact disc read-only memory, CD-ROM), a universal serial bus flash drive (universal serial bus flash drive), a removable hard disk, or another optical disc storage, a disk storage medium or another magnetic storage device, or any other medium that can be used to carry or store expected program code in a form of an instruction or a data structure and that can be accessed by a computer.

The foregoing descriptions are merely specific implementations of this application, and are not intended to limit the protection scope of embodiments of this application. Any variation or replacement that a person skilled in the art can easily figure out within the technical scope disclosed in embodiments of this application shall fall within the protection scope of embodiments of this application. Therefore, the protection scope of embodiments of this application should be subject to the protection scope of the claims.

## Claims

1. A method for transmitting a multicast and broadcast service interest indication message, applied to a communication apparatus, wherein the method comprises:
receiving a system information block SIB of a secondary cell SCell, wherein the SIB comprises information used for obtaining a multicast and broadcast service control channel MCCH configuration of a multicast and broadcast service MBS; and
sending a multicast and broadcast service interest indication MII message, wherein the MII message carries an identifier of an MBS service of interest to the communication apparatus.

2. The method according to claim 1, wherein the sending an MII message comprises:
if SIBs of all cells in a cell set are not received after the MII message is sent last time, sending the MII message, wherein
the cell set comprises one or more cells that provide a radio resource for the communication apparatus.

3. The method according to claim 1, wherein the sending an MII message comprises:
if the identifier of the MBS service of interest to the communication apparatus is different from an identifier that is of an MBS service and that is carried in an MII message sent last time, sending the MII message.

4. The method according to any one of claims 1 to 3, wherein
the SCell is a SCell in a master cell group MCG and/or a secondary cell group SCG that provides a radio resource for the communication apparatus.

5. The method according to claim 2, wherein
the cell set comprises one or more cells that provide a radio resource for the communication apparatus after the communication apparatus sends an MII message last time.

6. The method according to any one of claims 1 to 5, wherein
the SIB of the SCell is received through dedicated signaling.

7. The method according to any one of claims 1 to 5, wherein
the MII message further carries at least one of MBS frequency information and MBS priority information.

8. A method for transmitting a multicast and broadcast service interest indication message, applied to a communication apparatus, wherein the method comprises:
receiving first indication information, wherein the first indication information indicates the communication apparatus to report an identifier of a multicast and broadcast service MBS service; and
sending a multicast and broadcast service interest indication MII message, wherein the MII message carries an identifier of an MBS service of interest to the communication apparatus.

9. The method according to claim 8, wherein
the first indication information is carried in a system message;
the first indication information is received through dedicated signaling; or
the first indication information is carried in a message in a random access procedure.

10. A method for transmitting a multicast and broadcast service interest indication message, applied to a communication apparatus, wherein the method comprises:
sending first indication information, wherein the first indication information indicates a terminal device to report an identifier of a multicast and broadcast service MBS service; and
receiving a multicast and broadcast service interest indication MII message, wherein the MII message carries an identifier of an MBS service of interest to the terminal device.

11. The method according to claim 10, wherein
the first indication information is carried in a system message;
the first indication information is received through dedicated signaling; or
the first indication information is carried in a message in a random access procedure.

12. A communication apparatus, wherein the apparatus comprises:
a communication unit, configured to receive a system information block SIB of a secondary cell SCell, wherein the SIB comprises information used for obtaining a multicast and broadcast service control channel MCCH configuration of a multicast and broadcast service MBS, wherein
the communication unit is further configured to send a multicast and broadcast service interest indication MII message, wherein the MII message carries an identifier of an MBS service of interest to the communication apparatus.

13. The apparatus according to claim 12, wherein the communication unit sending an MII message is specifically:
if SIBs of all cells in a cell set are not received after the MII message is sent last time, sending the MII message, wherein
the cell set comprises one or more cells that provide a radio resource for the communication apparatus.

14. The apparatus according to claim 12, wherein the communication unit sending an MII message is specifically:
if the identifier of the MBS service of interest to the communication apparatus is different from an identifier that is of an MBS service and that is carried in an MII message sent last time, sending the MII message.

15. The apparatus according to any one of claims 12 to 14, wherein
the SCell is a SCell in a master cell group MCG and/or a secondary cell group SCG that provides a radio resource for the communication apparatus.

16. The apparatus according to claim 13, wherein
the cell set comprises one or more cells that provide a radio resource for the communication apparatus after the communication apparatus sends an MII message last time.

17. The apparatus according to any one of claims 12 to 16, wherein
the SIB of the SCell is received through dedicated signaling.

18. The apparatus according to any one of claims 12 to 16, wherein
the MII information further carries MBS frequency information and MBS priority information.

19. A communication apparatus, wherein the apparatus comprises:
a communication unit, configured to receive first indication information, wherein the first indication information indicates the communication apparatus to report an identifier of a multicast and broadcast service MBS service, wherein
the communication unit is further configured to send a multicast and broadcast service interest indication MII message, wherein the MII message carries an identifier of an MBS service of interest to the communication apparatus.

20. The apparatus according to claim 19, wherein
the first indication information is carried in a system message;
the first indication information is received through dedicated signaling; or
the first indication information is carried in a message in a random access procedure.

21. A communication apparatus, wherein the apparatus comprises:
a communication unit, configured to send first indication information, wherein the first indication information indicates a terminal device to report an identifier of a multicast and broadcast service MBS service, wherein
the communication unit is further configured to receive a multicast and broadcast service interest indication MII message, wherein the MII message carries an identifier of an MBS service of interest to the terminal device.

22. The apparatus according to claim 21, wherein
the first indication information is carried in a system message;
the first indication information is received through dedicated signaling; or
the first indication information is carried in a message in a random access procedure.

23. A communication apparatus, comprising a processor and an interface circuit, wherein the interface circuit is configured to receive a signal from a communication apparatus other than the communication apparatus and transmit the signal to the processor, or send a signal from the processor to a communication apparatus other than the communication apparatus; and the processor is configured to implement the method according to any one of claims 1 to 7 or the method according to claim 8 or 9 by using a logic circuit or executing a code instruction.

24. A communication apparatus, comprising a processor and an interface circuit, wherein the interface circuit is configured to receive a signal from a communication apparatus other than the communication apparatus and transmit the signal to the processor, or send a signal from the processor to a communication apparatus other than the communication apparatus; the processor is configured to implement the method according to claim 10 or 11 by using a logic circuit or executing a code instruction.

25. A computer-readable storage medium, wherein the storage medium stores a computer program or instructions, and when the computer program or the instructions are executed by a communication apparatus, the method according to any one of claims 1 to 7 is implemented, or the method according to claim 8 or 9 is implemented.

26. A computer-readable storage medium, wherein the storage medium stores a computer program or instructions, and when the computer program or the instructions are executed by a communication apparatus, the method according to claim 10 or 11 is implemented.

27. A computer program product, wherein the computer program product, when running on a computer, enables the computer to perform the method according to any one of claims 1 to 7, or perform the method according to claim 8 or 9.

28. A computer program product, wherein the computer program product, when running on a computer, enables the computer to perform the method according to claim 10 or 11.
